# EUROPÄISCHE PATENTSCHRIFT

(11) **EP 2 194 368 B1**
(45) Veröffentlichungstag und Bekanntmachung des Hinweises auf die Patenterteilung: **17.07.2019**
(21) Anmeldenummer: 08020927.3
(22) Anmeldetag: 03.12.2008
(51) Int. Cl.: G01N 15/14, G01N 21/31

(54) **Sensorsystem zum Erfassen und Spezifizieren von einzelnen Partikeln in einem Fluid**
Sensor system for detecting and specifying individual particles in a fluid
Système de détection destiné à détecter et spécifier des particules individuelles dans un fluide

(43) Veröffentlichungstag der Anmeldung: 09.06.2010
(73) Patentinhaber: Grundfos Management A/S, 8850 Bjerringbro (DK)
(72) Erfinder: Bentien, Anders, 8541 Sködrstrup (DK)
(74) Vertreter: Patentanwälte Vollmann Hemmer Lindfeld Partnerschaft mbB

(56) Entgegenhaltungen:
- EP-A- 0 713 086
- WO-A-2006/017811
- DE-A1- 2 340 843
- DE-A1- 4 438 833
- US-A- 3 413 464
- US-A- 4 302 206
- US-A- 5 082 771
- US-A- 5 422 720
- US-A1- 2007 047 868
- TEARE J M ET AL: "MEASUREMENT OF NUCLEIC ACID CONCENTRATIONS USING THE DYNA QUANT AND THE GENEQUANT", BIOTECHNIQUES, INFORMA HEALTHCARE, US, vol. 22, no. 6, 1 June 1997 (1997-06-01), pages 1170-1174, XP008041123, ISSN: 0736-6205

## Beschreibung

Die Erfindung betrifft ein Sensorsystem zum Erfassen und Spezifizieren von einzelnen Partikeln in einem Fluid.

In vielen Anwendungen ist es wünschenswert, Mikroorganismen auf kostengünstige und schnelle Weise nachweisen zu können, beispielsweise im Bereich der Wasserversorgung. Eine weit verbreitete Methode ist es, Mikroorganismen zum Nachweis auf Nährböden wachsen zu lassen. Dies dauert in der Regel 24 bis 48 Stunden, sodass der Nachweis recht lange dauert. Insbesondere bei der Wasserversorgung, beispielsweise in der Lebensmittelindustrie, ist es jedoch wünschenswert, Bakterien schnellstmöglich zu erkennen, um ggf. die Produktion stoppen zu können.

In den letzten Jahren sind verschiedene andere Methoden entwickelt worden, um Bakterien feststellen und quantifizieren zu können, welche schneller arbeiten. Dabei ist jedoch das Problem, dass die sehr einfach arbeitenden Methoden häufig eine große Anzahl von Bakterien benötigen, während Verfahren, welche eine geringe Anzahl von Bakterien feststellen können, sehr teuer sind.

US 5,811,251 offenbart ein System, bei welchem die Anzahl lebender Mirkoorganismen basierend auf einem CCD-Sytem gezählt wird. US 5,972,641 und US 5,518,894 offenbaren Schnelltestsysteme basierend auf statistischen Methoden, um die Anzahl der vorhandenen Bakterien zu ermitteln. Auch diese Verfahren benötigen bis zu elf Stunden um eine geringe Anzahl von Bakterien feststellen zu können.

Ferner sind Verfahren zum Erfassen von Mirkoorganismen basierend auf Fluoreszenz und Laserlicht beispielsweise aus US 5,891,394, US 5,858,697, US 5,763,203, US 5,751,839 und US 5,663,057 bekannt. Nachteil dieser Verfahren ist, dass eine teure Laserlichtquelle erforderlich ist. Darüber hinaus sind auch Immuntests bekannt, welche zum Erfassen bestimmter Typen von Mikroorganismen verwendet werden. Allerdings ist der Einsatz dieser Tests beschränkt und es ist erforderlich, Antikörper für jeden zu erfassenden Mikroorganismus herzustellen, was zeit- und kostenintensiv ist.

Ferner ist aus US 3,413,464 ein Verfahren gemäß dem Oberbegriff des Anspruchs 1 bekannt, bei dem die charakteristische Absorption von DNA und Proteinen zum Spezifizieren von biologischen Zellen genutzt wird. Aus WO 2006/017811 ist hingegen ein Verfahren bekannt, bei dem Absorptionsspektren von spektral überlappenden Fluoreszenzfarbstoffen mittels eines empirischen Faktors entmischt werden. US 5,422,720 beschreibt ein Verfahren zum Nachweisen von Bakterien in einer Blutkultur, bei dem das Verhältnis von Absorptionsmessungen von Licht unterschiedlicher Wellenlängen mit Erwartungswerten verglichen wird.

Es ist daher Aufgabe der Erfindung, ein kostengünstiges Sensorsystem zum Erfassen und Spezifizieren von einzelnen Partikeln in einem Fluid bereitzustellen, welches es ermöglicht, Mikroorganismen von anderen Partikeln zu unterscheiden.

Diese Aufgabe wird durch ein Sensorsystem mit den im Anspruch 1 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße Sensorsystem basiert auf einer Erkennung der unterschiedlichen Lichtabsorption von Partikeln, welche sich in einem Fluid befinden. Das erfindungsgemäße Sensorsystem weist eine von dem zu untersuchenden Fluid durchströmbare Messzelle auf. Eine Lichtquelle ist so an der Messzelle angeordnet, dass der von der Lichtquelle erzeugte Lichtstrahl durch die Messzelle hindurchtritt. D.h. es wird von der Lichtquelle ein die Messzelle durchlaufender Lichtstrahl erzeugt. Darüber hinaus ist ein Intensitätssensor vorgesehen. Dieser ist an der Messzelle gegenüberliegend zu der Lichtquelle angeordnet. Das bedeutet, der Intensitätssensor erfasst den Lichtstrahl, welcher von der Lichtquelle ausgeht und die Messzelle durchläuft. Der Intensitätssensor ist darüber hinaus zur separaten Erfassung der Intensität des Lichtstrahles in zumindest zwei unterschiedlichen Wellenlängenbereichen ausgebildet, welche von dem aus der Lichtquelle abgestrahlten Licht umfasst sind.

Dies ermöglicht es, Intensitätsänderungen und insbesondere die Lichtabsorption von Partikeln, welche in der Messzelle durch den Lichtstrahl hindurchtreten in zumindest zwei unterschiedlichen Wellenlängenbereichen zu erfassen. Auf diese Weise wird es möglich, Charakteristika einzelner Partikel aufgrund deren Absorptionsrate bei unterschiedlichen Wellenlängen zu erkennen. Insbesondere wird es möglich, organische Moleküle von anorganischen Verunreinigungen im Fluid zu unterscheiden. So weist die Absorptionsrate von Mikroorganismen in bestimmten Wellenlängenbereichen ein Minimum und in weiteren bestimmten Wellenlängenbereichen ein Maximum auf. Diese Charakteristika ermöglichen eine Erkennung. Durch Erfassung dieser Wellenlängenbereiche mit Hilfe des Intensitätssensors wird es möglich, einzelne Mikroorganismen entsprechend zu erkennen und zu spezifizieren. Insbesondere das Absorptionsspektrum von DNA und Proteinen eines Mikroorganismus sind einzigartig hinsichtlich des lokalen Minimums und des lokalen Maximums in dem Absorptionsspektrum, sodass eine Unterscheidung von anorganischen Verunreinigungen und anderen Partikeln möglich wird.

Wenn somit bei dem erfindungsgemäßen Sensorsystem von dem Intensitätssensor in den zwei unterschiedlichen Wellenlängenbereichen charakteristische Maxima oder Minima, welche einem Auswertesystem vorgegeben sind, erfasst werden, kann das Sensorsystem somit auf das Vorhandensein von Mikroorganismen in dem durch die Messzelle strömenden Fluid schließen. Diese Erfassung kann mit sehr großer Genauigkeit erfolgen. Es können einzelne Mikroorganismen bzw. Bakterien in dem Fluid nachgewiesen werden, wenn sie den Lichtstrahl in der Messzelle passieren.

Zur Erkennung von Bakterien oder Mikroorganismen soll erfindungsgemäß das charakteristische Absorptionsspektrum Verwendung finden. Nur die Absorption mit Hilfe des Intensitätssensors zu bestimmen, ist jedoch unter Umständen schwierig, da es passieren kann, dass ein Teil des Lichtes, wenn es auf einen Partikel auftrifft, gestreut wird. Dies kann insbesondere dann der Fall sein, wenn die Partikelgröße in der gleichen Größenordnung oder kleiner als die Wellenlänge des Lichtstrahles liegt. Diese Streuung ist schwierig zu messen. Hierzu müsste ein Sensor eingesetzt werden, welcher Licht, welches in verschiedene Richtungen gestreut wird, erfassen kann. Daher kann erfindungsgemäß, anstatt die Absorption selber zu bestimmen, auch einfach eine Intensitätsänderung bzw. Auslöschung von dem Intensitätssensor erfasst werden. Diese Intensitätsänderung beinhaltet die tatsächliche Absorption und den gestreuten Anteil des Lichtes. D. h. beim Passieren eines Partikels durch den Lichtstrahl ändert sich die Intensität um den Betrag des gestreuten und den Betrag des absorbierten Lichtes. Wenn in der nachfolgenden Beschreibung davon die Rede ist, dass die Absorption bestimmt wird, so ist zu verstehen, dass hierunter nicht nur die tatsächliche Absorption sondern auch die Auslöschung bzw. Intensitätsänderung zu verstehen ist, welche neben der Absorption auch einen gestreuten Lichtanteil beinhaltet.

Das spezifische Absorptionsspektrum von DNA und Proteinen ist verglichen zu anorganischen Verschmutzungen dadurch einzigartig, dass es eine sehr große Absorption unterhalb einer Wellenlänge von ungefähr 300 nm aufweist. Darüber hinaus sind lokale Minima und Maxima im Absorptionsspektrum im ultravioletten Bereich festgestellt worden. Diese Eigenschaften können genutzt werden, um mit Hilfe des Intensitätssensors Mikroorganismen, und insbesondere einzelne Mikroorganismen bzw. Bakterien zu detektieren. Bevorzugt ist daher der Intensitätssensor derart ausgebildet, dass er einen Wellenlängenbereich kleiner 300 nm erfassen kann.

Es ist somit nicht erforderlich, das ganze Absorptionsspektrum zu erfassen. Vielmehr ist es ausreichend, wenigstens zwei Wellenlängenbereiche zu erfassen, von denen vorzugsweise wenigstens einer im UV-Bereich kleiner 300 nm Wellenlänge gelegen ist.

Bevorzugt ist der Intensitätssensor derart ausgebildet, dass ein erster Wellenlängenbereich, in welchem die Intensität von dem Intensitätssensor separat erfassbar ist, ein Wellenlängenbereich ist, in welchem die zu erfassenden bzw. zu detektierenden Partikel ein lokales Minimum in der Lichtabsorption aufweisen. Bevorzugt ist dies eine Wellenlänge zwischen 220 und 260 nm. Dies ist der Bereich, in dem Mikroben üblicherweise ein lokales Minimum in der Lichtabsorption aufweisen.

Weiter bevorzugt ist der Intensitätssensor derart ausgebildet, dass ein zweiter Wellenlängenbereich, in welchem die Intensität separat erfassbar ist, ein Wellenlängenbereich ist, in welchem die zu erfassenden bzw. zu detektierenden Partikel ein lokales Maximum in der Lichtabsorption aufweisen. Dies ist vorzugsweise eine Wellenlänge zwischen 240 und 290 nm. In diesem Wellenbereich weisen Mikroorganismen üblicherweise ein lokales Maximum in der Absorptionsrate auf.

Insofern ist der Intensitätssensor vorzugsweise so ausgebildet, dass er zumindest in den beiden vorgenannten Wellenlängenbereichen die Intensität des aus der Messzelle austretenden Lichtstrahles erfassen kann. Die Lichtquelle ist dabei entsprechend ausgebildet, sodass sie Licht der auszuwertenden Wellenlängen aussendet. In diesem Wellenlängenbereich ist es dann anhand des Intensitätssensors möglich, die Lichtabsorption zu erfassen und beispielsweise beim Unter- oder Überschreiten von vorbestimmten Grenzwerten auf das Vorhandensein von Mirkoorganismen, und ggf. bestimmter Mikroorganismen mit charakteristischer Absorptionsrate zu schließen.

Gemäß einer weiteren bevorzugten Ausführungsform ist der Intensitätssensor derart ausgebildet, dass ein dritter Wellenlängenbereich vorhanden ist, in welchem die Intensität des aus der Messzelle austretenden Lichtstrahls von dem Intensitätssensor separat erfassbar ist. Dieser dritte Wellenlängenbereich, welcher ebenfalls von dem von der Lichtquelle abgestrahlten Licht umfasst ist, ist dabei bevorzugt ein Wellenlängenbereich, in welchem die zu erfassenden Partikel im Wesentlichen kein Licht absorbieren. Vorzugsweise ist dies ein Bereich einer Wellenlänge zwischen 300 und 1100 nm. DNA, Proteine und andere Bestandteile von Mikroorganismen bzw. Bakterien haben oberhalb einer Wellenlänge von 300 nm üblicherweise keine signifikante Absorption.

Um in den zuvor genannten charakteristischen Wellenlängenbereichen lokale Minima oder Maxima erfassen zu können, ist es vorzugsweise auch möglich, dass der Intensitätssensor derart ausgebildet ist, dass er in einem größeren Spektrum, welches die vorgenannten charakteristischen Wellenlängenbereiche einschließt, die Intensität erfasst und eine Zuordnung der erfassten Intensität zu einem Wellenlängenbereich zulässt.

Das Sensorsystem weist eine mit dem Intensitätssensor verbundene Auswerteeinrichtung auf, welche derart ausgebildet ist, dass sie anhand der erfassten Intensitäten in zumindest zwei genannten Wellenlängenbereichen die Art eines den Lichtstrahl passierenden Partikels erkennt. So kann die Auswerteeinrichtung die in den zwei Wellenlängebereichen aktuell erfassten Intensitäten mit vorgegebenen Grenzwerten vergleichen und beim Über- und Unterschreiten der Grenzwerte auf einen bestimmten Partikel
schließen. Insbesondere werden dabei stets die zuvor genannten zwei bzw. weiter bevorzugt drei genannten Wellenlängenbereiche zusammen betrachtet, d.h. bestimmte Partikel werden anhand ihrer jeweiligen Absorptionsrate in den genannten Wellenlängenbereiche erkannt. Die Erfassung in den einzelnen Wellenlängenbereichen erfolgt dabei vorzugsweise zeitgleich, sodass immer die jeweilige Intensität in allen Wellenlängenbereichen erfasst wird, welche charakteristische Absorptionsraten für bestimmte Partikel erwarten lassen.

Erfindungsgemäß ist die Auswerteeinrichtung derart ausgebildet, dass sie zur Bestimmung des Absorptionsgrades für einen erfassten Wellenlängenbereich die aktuell erfasste Intensität von einer zuvor erfassten oder gespeicherten Grund-Intensität des Lichtstrahl ohne Partikel subtrahiert. Auf diese Weise erhält man die aktuelle Absorptionsrate in dem jeweiligen Wellenlängenbereich. In dem Fall, dass es auch zu einer Streuung des Lichtes beim Auftreffen auf einen Partikel kommt, wird auf diese Weise nicht die eigentliche Absorption sondern eine Intensitätsänderung erfasst, welche sich aus Absorption und Streuung zussammensetzt. Diese weist jedoch einen auswertbaren charakteristischen Anteil der Absorption auf. D. h. auch die Intensitätsänderung weist in einzelnen Wellenlängenbereichen charakteristische Merkmale auf, welche die Identifikation eines Mikroorganismus ermöglichen. So kann beispielsweise die Intensitätsänderung in einem Wellenlängenbereich kleiner 300 nm und bei einer zweiten Wellenlänge größer 300 nm erfolgen. Die dabei erfasste Auslöschung sollte für einen Mikroorganismus unterhalb 300 nm über einem bestimmten Grenzwert liegen, was für eine signifikante Absorption in diesem Wellenlängenbereich spricht. Dahingegen sollte in dem Wellenlängenbereich über 300 nm die erfasste Auslöschung unterhalb eines festgesetzten Grenzwertes liegen, woran erkannt werden kann, dass der erfasste Partikel für eine Mikrobe nicht zu groß ist. Abgesehen davon sollte weiter bevorzugt das Verhältnis der beiden erfassten
Auslöschungswerte unter und oberhalb 300 nm Wellenlänge oberhalb eines bevorzugten Grenzwertes, beispielsweise größer als 3, liegen.

Zur Bestimmung bzw. Identifikation eines bestimmten Mikroorganismus können die bei den zwei unterschiedlichen Wellenlängenbereichen ermittelten Intensitätswerte bzw. die ermittelten Absorptionswerte miteinander verglichen werden, beispielsweise in der Weise, dass von der Auswerteeinrichtung erfasst wird, ob beide Werte gleich groß sind oder einer der Werte größer als der andere ist. Aus diesen Verhältnissen der Werte zueinander kann auf die Art des erfassten Partikels geschlossen werden und insbesondere erkannt werden, ob es sich um einen anorganischen Partikel oder um einen organischen Partikel wie eine Mikrobe handelt.

Erfindungsgemäß ist die Auswerteeinrichtung daher derart ausgebildet, dass sie die ermittelten Intensitätsänderungen oder Absorptionsgrade für zwei unterschiedliche Wellenlängenbereiche ins Verhältnis zueinander setzt und dieses Verhältnis mit einem gespeicherten Verhältniswert für einen bestimmten zu erkennenden Partikel vergleicht. Wenn die charakteristischen Wellenlängen untersucht werden, in denen charakteristische Minima und Maxima bei der Absorptionsrate auftreten, liegt das Verhältnis der Werte zueinander bei den zu erfassenden Mikroorganismen innerhalb bestimmter Grenzewerte. Insbesondere kann durch unterschiedliche Grenzwerte auch eine Unterscheidung bestimmter Mikroorganismen voneinander möglich sein. Beispielsweise liegt das Verhältnis für Bakterien üblicherweise im Bereich von 0 bis 1. Wenn das Verhältnis außerhalb dieser Werte liegt, kann ausgeschlossen werden, dass es sich nicht um ein Bakterium. Es muss sich um einen andersartigen Partikel handeln.

Erfindungsgemäß ist es darüber hinaus auch möglich, auf die Größe eines Partikels zu schließen. Dazu ist die Auswerteinrichtung bevorzugt so ausgebildet, dass sie die Größe eines Partikels auf Grundlage der erfassten Intensität bestimmt, bevorzugt indem ein erfasster Absorptionsgrad auf eine Grund-Intensität des Lichtstrahls ohne Partikel bezogen wird. Bei einem größeren Partikel ist eine höhere Absorption zu erwarten als bei einen kleinen Partikel. Durch den Bezug auf die Grundintensität wird die Erfassung unabhängig von der jeweiligen Grundintensität, sodass die Kalibrierung des System vereinfacht wird. Es müssen nicht Absolutwerte miteinander verglichen werden, sondern stets nur Relativwerte und die Grundintensität hat keinen Einfluss auf die Qualität des Auswerteergebnisses. Da auch die Grundintensität im Laufe des Betriebs immer wieder erfasst werden kann, können somit auch Veränderungen des Sensorsystems das Messergebnis bzw. Auswerteergebnis im Wesentlichen nicht beeinflussen.

Das Sensorsystem ist bevorzugt derart ausgebildet, dass der Lichtstrahl hinter der Lichtquelle so fokussiert wird, dass sein Fokus im Inneren der Messzelle gelegen ist, wobei der Lichtstrahl in seinem Fokusbereich vorzugsweise eine Querschnittsfläche aufweist, welche kleiner als das sechzigfache der Querschnittsfläche der zu erfassenden Partikel ist. Durch diese Fokussierung wird eine ausreichende Messgenauigkeit des Systems gewährleistet.

Weiter bevorzugt erfolgt die Fokussierung in der Weise, dass der Lichtstrahl in seinem Fokusbereich eine Querschnittsfläche aufweist, welche kleiner 500 µm² ist, weiter bevorzugt kleiner als 100 µm² oder 24 µm².

Darüber hinaus ist es bevorzugt, dass sich die Querschnittsfläche des Lichtstrahl von dessen Fokusbereich zu dem Intensitätssensor um nicht mehr als 100 %, vorzugsweise um nicht mehr als 50 % aufweitet.

Im Strahlenverlauf des Lichtstrahles ist bevorzugt hinter der Lichtquelle und vor dem Eintritt in die Messzelle und/oder hinter der Messzelle und vor dem Intensitätssensor ein Kollimator und/oder eine Blende angeordnet. Durch diese Elemente kann eine ideale Strahlführung erreicht werden und der Strahl in der Messzelle so gebündelt bzw. so fokussiert werden, dass die gewünschte Messgenauigkeit zum Erfassen einzelner Partikel erzielt wird.

Die Lichtquelle kann so ausgebildet sein, dass sie ein Wellenlängenspektrum aussendet, welches alle der von dem Intensitätssensor zur Messung erfassbaren Wellenlängenbereiche abdeckt. So kann das ganze erforderliche Wellenlängenspektrum von ein und derselben Lichtquelle ausgesandt werden. Gemäß einer speziellen Ausführungsform ist jedoch vorgesehen, dass die Lichtquelle aus mehreren, vorzugsweise monochromatischen Einzellichtquellen mit unterschiedlichen Wellenlängen zusammengesetzt bzw. gebildet ist. Dies können z.B. LED sein. Durch diesen Aufbau lässt sich erreichen, dass gezielt spezielle Wellenlängen ausgesandt werden, welche für die erfindungsgemäße Messung in den einzelnen Wellenlängenbereichen des Intensitätssensors erforderlich sind. Durch die Beschränkung auf diese speziellen Wellenlängenbereiche kann das Messergebnis verbessert werden. Die monochromatischen Einzel-Lichtquellen können so angeordnet werden, dass das von ihnen ausgesandte Licht über Lichtleiter in einem gemeinsamen Strahlengang zusammengeführt wird, welcher dann die Messzelle als ein Lichtstrahl durchtritt. So ist eine zeitgleiche Erfassung der Lichtabsorption in allen Wellenlängenbereichen möglich, wenn ein Partikel den so aus mehreren Einzellichtstrahlen zusammengesetzten Lichtstrahl in der Messzelle durchtritt.

Bevorzugt ist entsprechend der Intensitätssensor auch aus mehreren Einzel-Intensitätssensoren gebildet und weist einen Strahlteiler auf, welcher den aus der Messzelle austretenden Lichtstrahl in Teilstrahlen unterschiedlicher Wellenlängen zerlegt, welche jeweils einem der Einzel-Intensitätssensoren zugeleitet werden. Auf diese Weise ist eine einfache zeitgleiche Erfassung der Intensitäten in den verschiedenen Wellenlängenbereichen möglich. Bevorzugt können alle Einzel-Intensitätssensoren gleich aufgebaut sein, die Zuordnung des Wellenlängenspektrums erfolgt lediglich durch den Strahlteiler. Auf diese Weise kann ein kostengünstiger Aufbau des Sensorsystems erreicht werden.

Alternativ ist es auch möglich, einen Intensitätssensor vorzusehen, welcher die Intensität des eintreffenden Lichtes über ein größeres Wellenlängenspektrum erfasst und eine Zuordnung der erfassten Intensität zu einzelnen Wellenlängen ermöglicht. Diese Zuordnung kann z.B. dadurch erreicht werden, dass das Licht unterschiedlicher Wellenlängen über einen Strahlleiter wie z.B. ein Prisma auf unterschiedliche Bereiche der Sensoroberfläche gelenkt wird.

Ausgehend von der Lichtquelle wird der Lichtstrahl zu der Messzelle vorzugsweise durch einen Lichtleiter geführt. Insbesondere bei Verwendung mehrerer Einzel-Lichtquellen können die Einzel-Lichtstrahlen von diesen Einzel-Lichtquellen über Lichtleiter zu der Messzelle geführt und dort in einen gemeinsamen Strahlengang zusammengeführt werden.

Nachfolgend wird die Erfindung anhand der beigefügten Figuren beispielhaft beschrieben. In diesen zeigt:
- Fig. 1: schematisch eine erste Ausführungsform gemäß der Erfindung,
- Fig. 2: eine Detailansicht der Messzelle und des diese durchlaufenden Lichtstrahles gemäß Fig. 1,
- Fig. 3: schematisch eine zweite Ausführungsform der Erfindung,
- Fig. 4: schematisch eine vergrößerte Ansicht der Messzelle der Ausführungsform gemäß Fig. 3,
- Fig. 5: schematisch die Absorptionskurven von DNA, Protein und Mikroben, welche zur Erkennung von Partikeln wie Mikroben verwendet werden,
- Fig. 6: schematisch die Absorptionskurven, wenn ein Partikel die Messzelle durchtritt,
- Fig. 7: schematisch die Absorptionskurven, wenn ein Partikel die Messzelle durchtritt, welcher nicht als Mikrobe identifiziert wird,
- Fig. 8: schematisch den Intensitätsverlauf, wenn ein Partikel die Messzelle durchtritt, und
- Fig. 9: schematisch den Intensitätsverlauf, wenn ein Partikel die Messzelle durchtritt, welcher nicht als Mikrobe identifiziert wird.

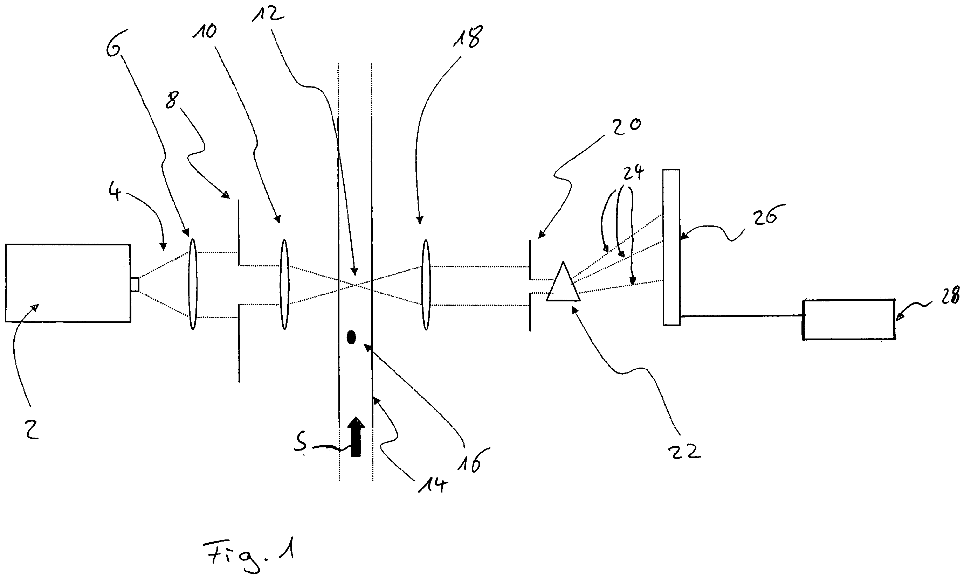

Gemäß der ersten Ausführungsform, welche in Figur 1 gezeigt ist, ist eine Lichtquelle 2 vorgesehen. Diese erzeugt einen Lichtstrahl 4 mit einer Bandbreite unterschiedlicher Wellenlängen. Vorzugsweise deckt der Lichtstrahl 4 einen Wellenlängebereich von zumindest 200 nm bis 1100 nm ab. Der Lichtstrahl 4, welcher aus der Lichtquelle 2 austritt, durchläuft nachfolgend eine Kollimatorlinse 6, welche einen parallel gebündelten Lichtstrahl erzeugt und anschließend eine Blende 8. Der aus der Blende 8 austretende Lichtstrahl wird durch eine Sammellinse 10 in einem Fokus 12 gebündelt. Der Fokus 12 ist im Inneren einer Messzelle 14 gelegen, welche von einem Fluid in Richtung des Pfeils S durchströmt wird. Das Fluid in der Messzelle kann einzelne Partikel 16 enthalten, welche mit der Strömung durch die Messzelle 14 hindurch fließt. Damit der Lichtstrahl ausgehend von der Sammellinse 10 in die Messzelle 14 eintreten und an der gegenüberliegenden Seite, wie nachfolgend beschrieben, austreten kann, sind die Wandungen der Messzelle 14 zumindest in den Ein- und Austrittsbereichen des Lichtstrahls 4 transparent ausgebildet. Ausgehend von dem Fokus 12 erweitert sich der Lichtstrahl 4 wieder und tritt an der der Eintrittsseite gegenüberliegenden Seite aus der Messzelle 14 aus. Dort erreicht er wiederum eine Kollimatorlinse 18, welche den Lichtstrahl wieder parallel ausrichtet, und durchläuft anschließend eine Blende 20.

Der aus der Blende 20 austretende Lichtstrahl trifft auf ein Prisma 22, welches als Strahlteiler bzw. Wellenlängenfilter fungiert. Das Prisma 22 lenkt den Lichtstrahl abhängig von seiner Wellenlänge in unterschiedlichen Winkeln ab und teilt so den Lichtstrahl in Lichtstrahlen 24 unterschiedlicher Wellenlängen auf. Die Lichtstrahlen unterschiedlicher Wellenlängen treffen somit in unterschiedlichen Bereichen auf einen Intensitätssensor 26 auf. Der Intensitätssensor 26 hat eine Sensoroberfläche, welche eine Vielzahl von Messpunkten bzw. Messbereichen aufweist und so die Intensität des auftreffenden Lichtes an unterschiedlichen Bereichen bestimmen kann. D.h. die Intensität des Lichts unterschiedlicher Wellenlängen, welches an unterschiedlichen Bereichen auf der Sensoroberfläche auftrifft, kann von dem Intensitätssensor 26 einzeln erfasst werden. Der Intensitätssensor 26 kann somit die Intensität einzelner Wellenlängenbereiche erfassen, da diese Wellenlängenbereiche auf unterschiedliche Messpunkte bzw. Messbereiche an der Sensoroberfläche auftreffen.

Wenn nun ein Partikel 16 den Lichtstrahl 4, welcher in dem Fokus 12 innerhalb der Messzelle 14 gebündelt ist, durchtritt, kommt es zu einer Absorption des Lichtes in dem Partikel 16, wodurch sich die Intensität des aus der Messzelle 14 austretenden Lichtes verringert. Dabei verringert sich die Intensität in unterschiedlichen Wellenbereich unterschiedlich, was durch die Aufspaltung der Wellenlängenbereiche in dem Prisma 12 und die Erfassung an unterschiedlichen Messbereichen des Intensitätssensors 26 erfasst werden kann. Die Absorptionsrate in bestimmten Wellenlängenbereichen ist charakteristisch für die Art der Partikel, sodass hierüber die Art der vorhandenen Partikel bestimmt werden kann. Hierzu ist der Intensitätssensor 26 mit einer Auswerteeinrichtung 28 verbunden, welche die von dem Intensitätssensor 26 erzeugten, vorzugsweise elektrischen, die Intensität repräsentierenden Signale auswertet.

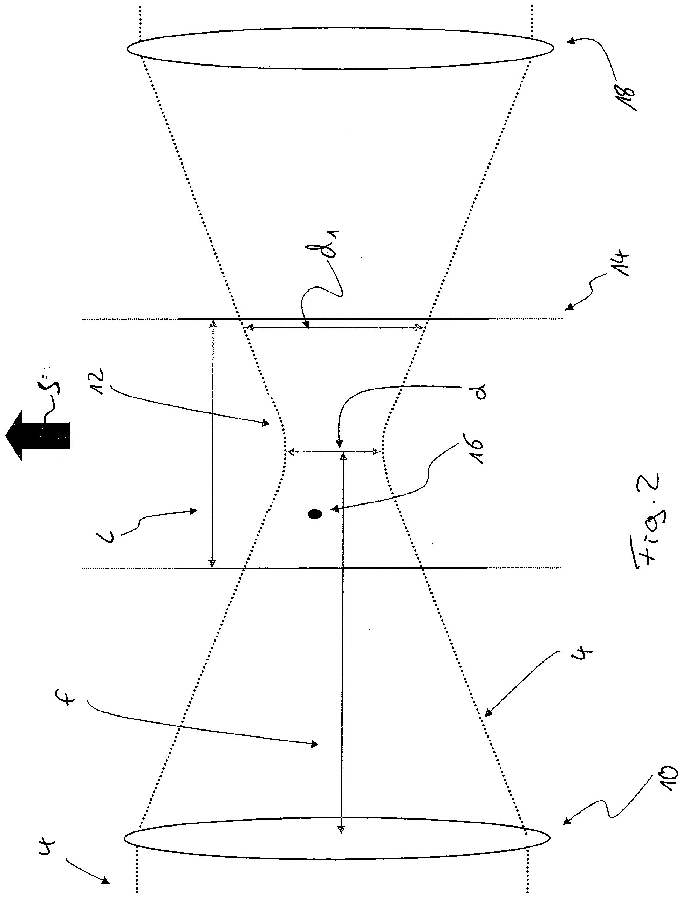

Fig. 2 zeigt im Detail, wie der Lichtstrahl 4 in die Messzelle 14 fokussiert wird. Die Sammellinse 10 hat eine Brennweite f und fokussiert den Lichtstrahl 4 in den Fokus 12. Der Fokus 12 ist dabei in der Mitte der Messzelle 14 in deren Breitenrichtung I gelegen. In Durchtrittsrichtung des Lichtstrahl hat die Messzelle 14 eine Breite I. Der Durchmesser des Lichtstrahls 4 im Fokus 12 hat den Durchmesser d. Ausgehend von dem Fokus 12 weitet der Lichtstrahl sich zur gegenüberliegenden Austrittswand der Messzelle 14, durch welche der Lichtstrahl aus der Messzelle 14 austritt, auf, sodass er dort einen Durchmesser d₁ aufweist. Anschließend trifft der Lichtstrahl 4 auf die Sammellinse 18. Die zu erfassenden Partikel 16 haben in der Regel eine Größe von wenigen µm und sind vorzugsweise Mikroben. Um einzelne Mikroben erfassen zu können, ist es wichtig, dass der Strahldurchmesser d im Inneren der Messzelle 14 nicht zu groß wird. Er muss im selben Größenbereich wir die zu erfassenden Partikel liegen, da sonst die zu messende Absorption zu gering wäre. Die Querschnittsfläche im Fokus 12 liegt vorzugsweise im Bereich einiger µm². Der Durchmesser d im Fokus liegt bevorzugt bei ungefähr 1,22λ x f/d₀, wobei d₀ der Durchmesser des Lichtstrahles beim Austritt aus der Blende 8 ist und λ die Wellelänge des Lichtes ist. Bei einem Durchmesser d₀ zwischen 1 mm und 2 mm und einer Brennweite f von ungefähr 30 mm kann bei einer Messzellenbreite I von ungefähr 200 mm und einer Wellenlänge von ungefähr 0,3 µm ein Strahldurchmesser im Brennpunkt von ungefähr 8 µm und beim Austritt von ungefähr 10 bis 11 µm erreicht werden. Hieran ist zu erkennen, dass es möglich ist, den Strahl ausreichend klein zu fokussieren, um den Strahldurchmesser größenordnungsmäßig in den Bereich der Größe der zu erfassenden Partikel 16 zu bringen, sodass deren Absorption an dem Intensitätssensor 26 deutlich messbar wird.

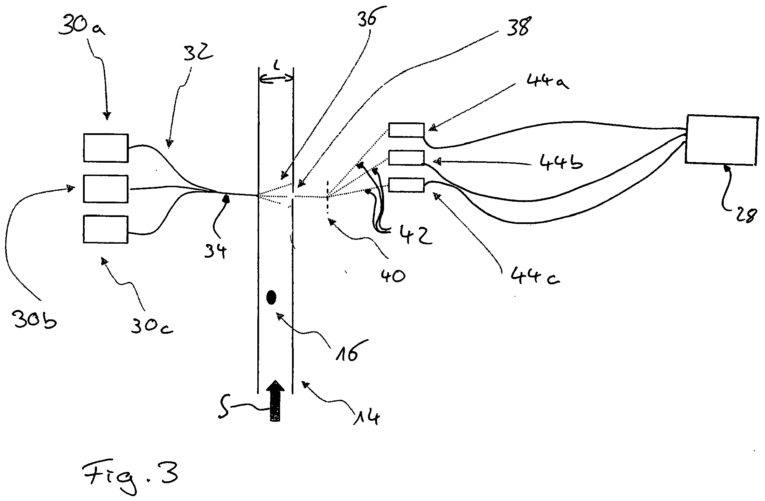

Fig. 3 zeigt eine zweite mögliche Ausführungsform der Erfindung, wobei bei dieser zweiten Ausführungsform gleiche Bauteile gemäß der vorangehenden Beschreibung mit gleichen Bezugsziffern gekennzeichnet sind. Bei dieser zweiten Ausführungsform ist die Lichtquelle aus drei monochromatischen Einzel-Lichtquellen 30a, 30 b und 30c ausgebildet. Das aus den Einzel-Lichtquellen austretende Licht wird über drei Lichtleiter 32 zu der Messzelle 14 geführt. Bei den monochromatischen Einzel-Lichtquellen 30a, 30b und 30c kann es sich beispielsweise um Leuchtdioden mit unterschiedlicher Wellenlänge handeln. D.h. die drei monochromatischen Einzel-Lichtquellen senden Licht mit unterschiedlichen Wellenlängen aus. Dabei sind die Wellenlängen so gewählt, dass sie den charakteristischen Bereichen entsprechen, welche hier zur Unterscheidung der Partikel zu untersuchen sind. Die Lichtleiter 32 münden in einen gemeinsamen Lichtleiter 34, welcher das Licht dann zu der Messzelle 14 leitet. Beim Austritt aus dem Lichtleiter 34 weitet sich der Lichtstrahl 36, wenn er die Messzelle 14 in deren Breitenrichtung I durchläuft, geringfügig auf. Der aus dem Lichtleiter 34 austretende Lichtstrahl 36 weitet sich jedoch beim Durchlaufen der Messzelle nur so geringfügig auf, dass hier auf einen Kollimator verzichtet werden kann. Gegenüberliegend zu dem Austritt aus dem Lichtleiter 34 ist in der Messzelle 14 eine kleine Öffnung bzw. Blende 38 ausgebildet, durch welche der Lichtstrahl aus der Messzelle 14 austritt. Nachfolgend tritt der Lichtstrahl durch einen Strahlteiler 40, beispielsweise in Form eines Prismas oder Beugungsgitters, welcher, wie anhand von Fig. 1 erläutert, den Lichtstrahl in Einzel-Lichtstrahle 42 unterschiedlicher Wellenlängen aufteilt. Die Einzel-Lichtstrahlen 42 werden unterschiedlich weit gebeugt bzw. gebrochen, sodass sie in unterschiedlichen Winkeln aus dem Strahlteiler 40 austreten und so getrennt voneinander Einzel-Intensitätssensoren 44 a, 44b und 44 c zugeführt werden können. Die Einzel-Intensitätssensoren 44 a, 44b und 44c erfassen die Lichtintensitäten bei den unterschiedlichen Wellenlängen, in dem ihnen einzeln die unterschiedlichen Wellenlängenbereiche zugeführt werden. Die Intensitätssensoren 44 sind ebenso wie bei dem ersten Ausführungsbeispiel mit einer Auswerteeinrichtung 28 verbunden, welche die Auswertung der erfassten Intensitäten in der Weise vornimmt, dass einzelne Partikel anhand der Absorptionsraten bei unterschiedlichen Wellenlängen identifiziert werden können.

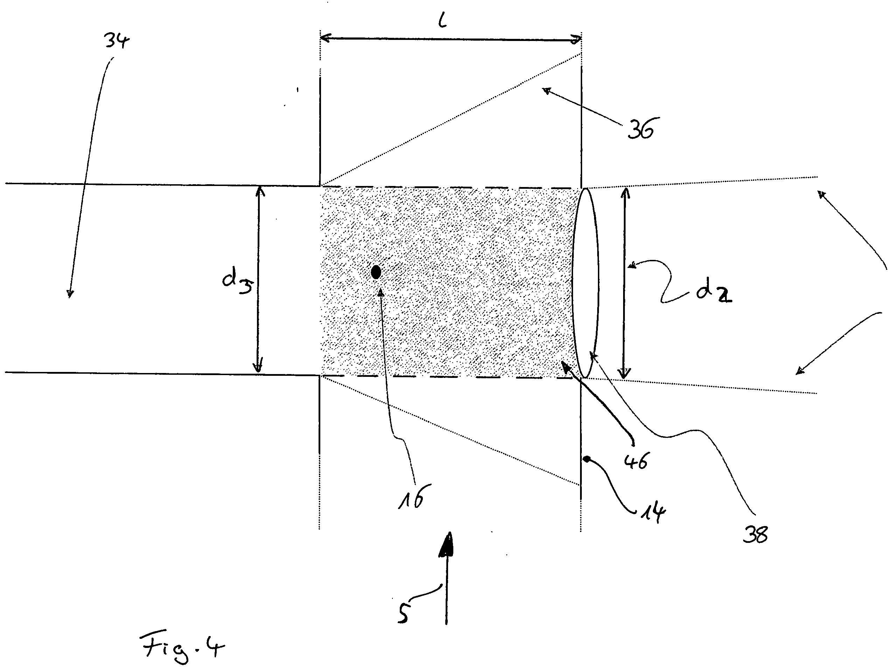

Fig. 4 zeigt in einer Detailansicht den Durchtritt des Lichtstrahls 36 durch die Messzelle 14. Der Lichtleiter 34 endet an einer Wandung der Messzelle 14. Dort tritt der Lichtstrahl 36 aus dem Lichtleiter 34 aus und durchläuft die Messzelle in ihrer Breitenrichtung I bis zur gegenüberliegenden Wandung. Dabei weitet der Lichtstrahl sich auf. Um ein definiertes Messvolumen zu erreichen, ist an der Austrittsseite der Messzelle in der Wandung eine Öffnung bzw. Blende 38 ausgebildet, durch welche der Lichtstrahl aus der Messzelle 14 austritt. So wird erreicht, dass für die Messung bzw. Erfassung und Spezifikation von Partikeln 16 nur der durch die gestrichelten Linien in Fig. 4 begrenzte Bereich 46 des Lichtstrahls 36 verwendet wird. Es wird somit ein definiertes Messvolumen im Inneren der Messzelle 14 geschaffen. Auch bei dieser Ausführungsform liegt die Breite I der Messzelle vorzugsweise im Bereich von 200 µm bis 1000 µm. Der Durchmesser des Bereichs 46, d.h. des Messvolumens, der Durchmesser d₂ des aus der Blende 38 austretenden Strahls sowie der Durchmesser d₃ des Lichtleiters 34 liegen vorzugsweise im Bereich von 5 µm bis 20 µm, d.h. in ähnlicher Größenordnung wie die zu erfassenden Partikel 16, sodass beim Durchtritt von Partikeln 16 durch den Bereich 46 erfassbare Intensitätsänderungen an den Sensoren 44 auftreten.

Es ist zu verstehen, dass bei der zweiten Ausführungsform anstatt der Einzel-Intensitätssensoren 44 auch ein Intensitätssensor 26, wie er anhand von Fig. 1 beschrieben wurde, Verwendung finden könnte. Alternativ könnte auch bei der ersten Ausführungsform ein Intensitätssensor bestehend aus mehreren Einzel-Intensitätssensoren Verwendung finden.

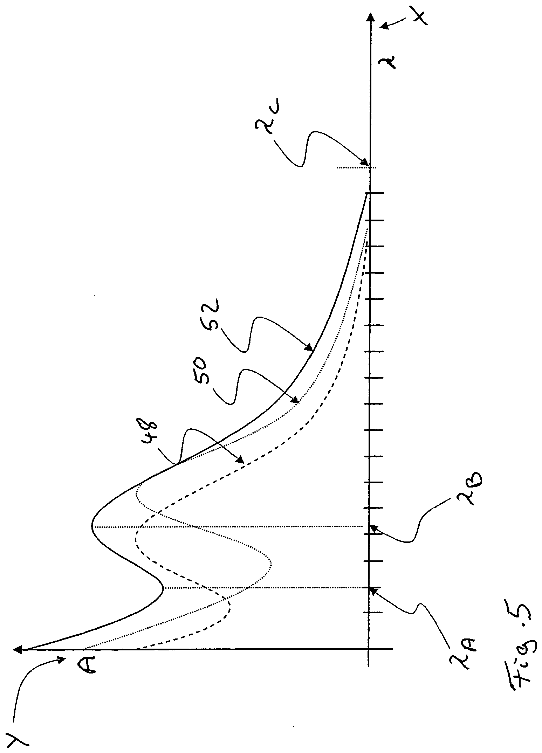

Anhand von Fig. 5 wird die charakteristische Absorption von DNA, Protein und Mikroben erläutert. In dem Diagramm in Fig. 5 ist auf der X-Achse die Wellenlänge aufgetragen und auf der Y-Achse die erfasste Absorption A. Im Diagramm sind drei Kurven 48, 50 und 52 eingezeichnet. Die Absorptionskurve 48 ist die Absorptionskurve von DNA, die Absorptionskurve 50 diejenige von Protein und die Absorptionskurve 52 ist die Absorptionskurve einer Mikrobe. Zur Bestimmung und Spezifikation der Partikel 16 werden drei spezifische Wellenlängen λ_{A}, λ_{B} und λ_{C} betrachtet. Dabei ist zu erkennen, dass bei der Wellenlänge λ_{A} die Absorptionskurve 52 der Mikrobe ein lokales Minimum aufweist. Bei der Wellenlänge λ_{B} weist die Absorptionskurve 52 ein lokales Maximum auf und bei der Wellenlänge λ_{C} ist im Wesentlichen keine Absorption feststellbar. Diese Verteilung der lokalen Maxima und Minima der Absorption bei unterschiedlichen Wellenlängen ist einzigartig für Mikroben, sodass einzelne Partikel von dem Sensorsystem erfasst und als Mikroben bzw. Bakterien spezifiziert werden können, indem lokale Minima und Maxima bei den genannten Wellenlängen λ_{A}, λ_{B} und λ_{C} ausgewertet werden. dazu erzeugt die Lichtquelle gemäß Fig. 1 vorzugsweise ein Wellenlängenspektrum, welches sowohl die Wellenlängen λ_{A}, λ_{B} als auch λ_{C} umfasst. Bei der zweiten Ausführungsform werden entsprechend drei monochromatische Lichtquellen 30a, 30b und 30 c verwendet, von denen eine Licht mit der Wellenlänge λ_{A}, eine Licht mit der Wellenlänge λ_{B} und eine Licht mit der Wellenlänge λ_{C} aussendet. Entsprechend werden drei Intensitätsensoren 44a, 44b und 44c verwendet, um die Intensitäten bei den drei unterschiedlichen Wellenlängen auszuwerten. Die Wellenlängen λ_{A}, λ_{B} und λ_{C} werden in den Lichtstrahlen 42 voneinander getrennt, welche in unterschiedlichen Winkeln abgelenkt werden, sodass jeweils eine der genannten Wellenlängen auf einen der Einzelintensitätssensoren 44a, 44b und 44c auftrifft. Die Wellenlänge λ_{A} liegt vorzugsweise im Bereich zwischen 220 und 260 nm, die Wellenlänge λ_{B} im Bereich zwischen 240 und 290 nm und die Wellenlänge λ_{C} im Bereich zwischen 300 1100 nm.

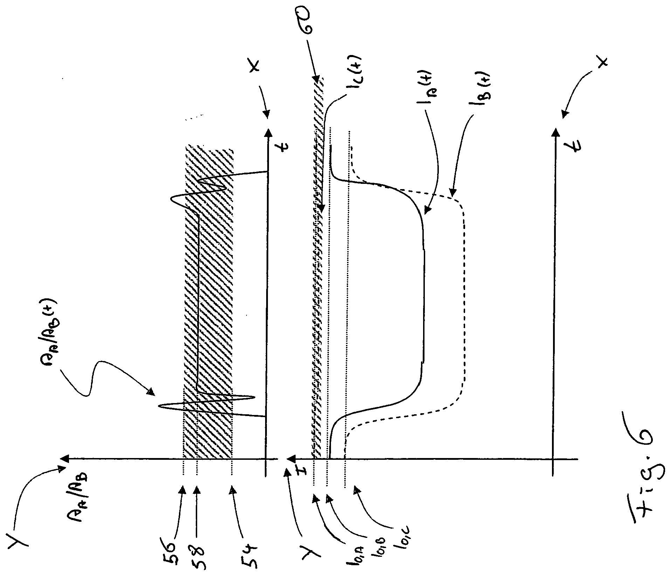

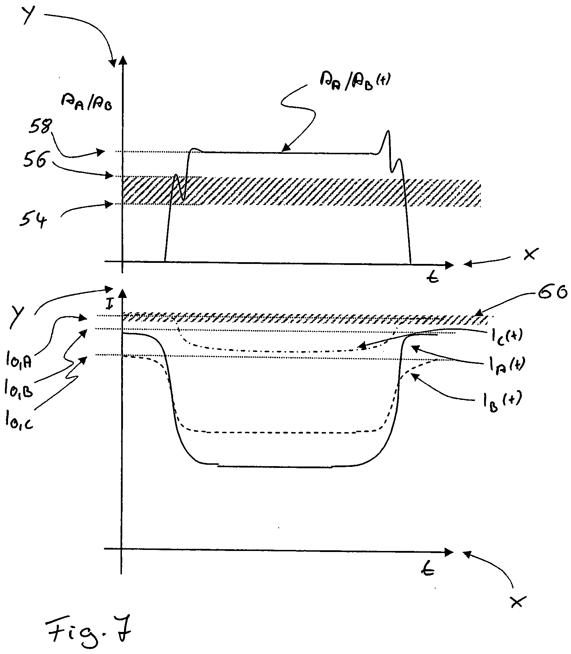

Anhand der Fig. 6 und 7 wird nun noch einmal näher die Unterscheidung einer Mikrobe und eines andersartigen Partikel anhand der Auswertung der Absorption bei unterschiedlichen Wellenlängen erläutert. Fig. 6 zeigt übereinander zwei Diagramme. Auf der X-Achse ist der Verlauf der Zeit t aufgetragen. Im unteren Diagramm ist auf der Y-Achse die Intensität I, wie sie von dem Intensitätssensor 26 oder den Intensitätssensoren 24 erfasst wird, aufgetragen. Die drei waagerechten Kurven I_{0,A}, I_{0,B} und I_{0,C} sind die Hintergrund- bzw. Grundintensitäten bei den drei unterschiedlichen Wellenlängen λ_{A}, λ_{B} und λ_{C} (s. Fig. 5), wie sie von den Intensitätssensoren 26 oder 44 gemessen werden, wenn keine Partikel 16 die Messzelle 14 durchfließen. Die drei zeitlichen Intensitätsverläufe I_{0,A}(t), I_{0.B} (t) und I_{0,C} (t) zeigen die zeitlichen Intensitätsverläufe, welche bei den Wellenlängen λ_{A}, λ_{B} und λ_{C} gemessen werden, wenn Partikel den Lichtstrahl in der Messzelle 14 durchtreten. Auf Grundlage dieser erfassten Intensitäten werden die Absorptionsraten A_{A}(t), A_{B}(t) und A_{C}(t) bestimmt, wenn Partikel 16 durch den Strahlengang in der Messzelle 14 hindurchtreten. Diese Absorptionen werden nach folgenden Gleichungen bestimmt: A_{A}(t)= I_{0,A} - I_{A}(t), A_{B}(t)= I_{0.B} - I_{B}(t) und A_{C}(t)= I_{0,C} - I_{C}(t).

In dem oberen Diagramm in Fig. 6 ist das zeitabhängige Verhältnis der Absorptionsraten A_{A} zu A_{B}, d.h. A_{A}/ A_{B} (t) über die Zeit t aufgetragen. D.h. auf der Y-Achse ist das Verhältnis der Absorptionsraten A_{A}/ A_{B} aufgetragen. Anhand dieses Verhältnisses kann bestimmt werden, ob es sich bei dem Partikel 16 und eine Mikrobe handelt. Wenn der Partikel 16 vollständig im Strahl gelegen ist, hat das Verhältnis A_{A}/ A_{B} einen konstanten Wert 58 zwischen den Grenzwerten 54 und 56. Die Grenzwerte 54 und 56 liegen vorzugsweise bei 0,2 und 1. Um zu bestimmen, ob es sich tatsächlich um eine Mikrobe handelt, wird ferner noch die Intensitätskurve I_{C}(t) bei der Wellenlänge λ_{C} berücksichtigt. Die Intensität I_{C}(t) liegt über den gesamten zeitlichen Verlauf in dem schraffierten Bereich 60, verringert sich also im Wesentlichen nicht, wenn ein Partikel 16 durch den Lichtstrahl trifft. Wie oben erläutert, ist es für Mikroben charakteristisch, dass sie oberhalb eines bestimmten Wellenlängenbereichs im Wesentlichen keine Absorption aufweisen. Insofern kann hieran zusammen mit dem Verhältnis A_{A}/ A_{B} zwischen den Grenzwerten 54 und 56 erkannt werden, dass es sich bei dem Partikel 16, welcher den Lichtstrahl durchtreten hat, um eine Mikrobe handelt.

Fig. 7 zeigt nun Diagramme entsprechend denen aus Fig. 6 für den Fall, dass ein anderer Partikel 16 als eine Mikrobe den Lichtstrahl durchtritt. Auch in diesem Fall hat das Absorptionsverhältnis A_{A}/ A_{B} (t) einen konstanten Wert 58, wenn der Partikel 16 sich vollständig in dem Lichtstrahl in der Messzelle 14 befindet. Allerdings liegt dieser konstante Wert 58 außerhalb der Grenzwerte 54 und 56. D.h. hier gibt es nicht die erwarteten Maxima und Minima bei den Wellenlängen -λ_{A} und λ_{B}, wie es für Mikroben charakteristisch ist, was anhand von Fig. 5 erläutert wurde. Dies führt zu dem größeren Absorptionsverhältnis A_{A}/ A_{B} mit dem Wert 58. Darüber hinaus liegt auch hier die Intensität I_{C}(t) außerhalb des Bereichs 60, was erkennen lässt, dass der Partikel keine Mikrobe ist, da Mikroben bei dem Wellenlängenbereich λ_{C} im Wesentlichen keine Absorption aufweisen, sodass es hier nicht zu einer Verringerung der Intensität kommen würde.

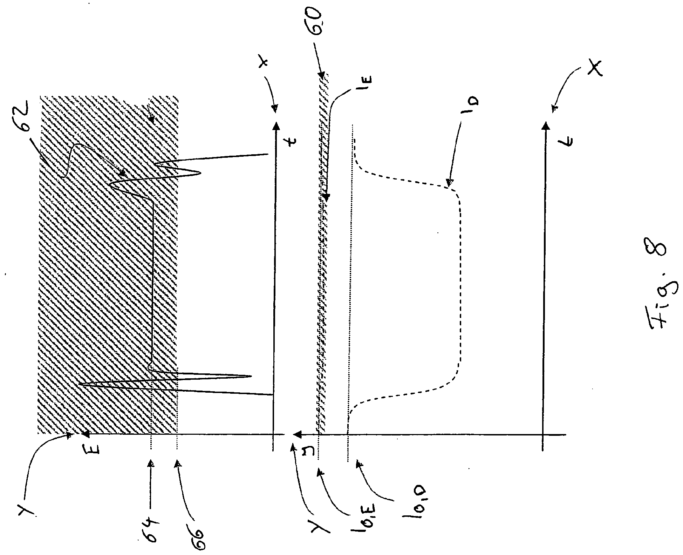

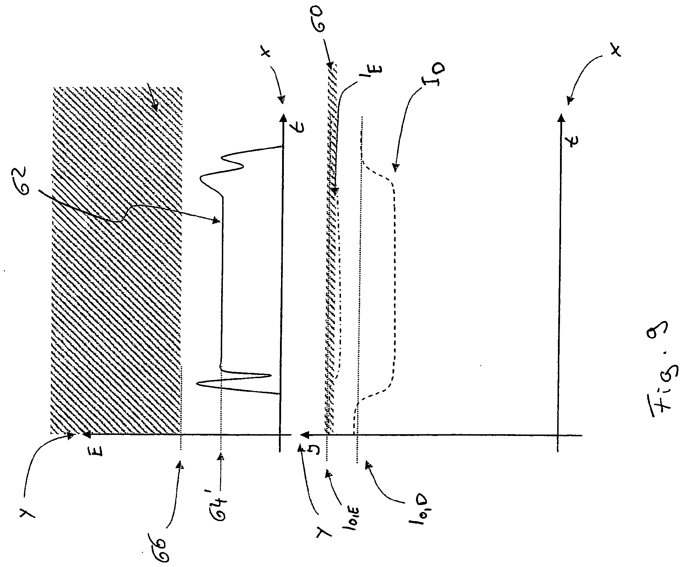

Anhand der Figuren 6 und 7 wurde die Unterscheidung einer Mikrobe von einem andersartigen Partikel auf Grundlage der Absorptionsrate erläutert. Wie oben beschrieben lässt sich die Absorptionsrate nicht immer allein aus der erfassten Intensitätsänderung bestimmen, da es auch noch zu einer Streuung des Lichtes kommen kann. In entsprechender Weise kann die Erkennung einer Mikrobe jedoch auch allein anhand der Intensitätsänderung, d. h. anhand der erfolgten Auslöschung, welche Absorption und Streuung beinhaltet, erfolgen. Auch ist eine Unterscheidung nur anhand von zwei unterschiedlichen Wellenlängen möglich. Dies wird beispielhaft anhand der Figuren 8 und 9 beschrieben. Im unteren Teil der Diagramme gemäß Figuren 8 und 9 ist wie auch in den Figuren 6 und 7 die Intensität I über der Zeit t aufgetragen.

Im unteren Diagramm von Figur 8 sind zwei Intensitätsverläufe I_{D} und I_{E} über die Zeit t aufgetragen. Dabei entsprechen die Intensitäten I_{E} und I_{D} Intensitäten bei zwei unterschiedlichen Wellenlängen λ_{E} und λ_{D}. Dabei liegt die Wellenlänge λ_{D} vorzugsweise unterhalb 300 nm und die Wellenlänge λ_{E} oberhalb 300 nm. Die Intensitätsverläufe I_{0,E} und I_{0,D}, welche als Geraden in Figur 8 dargestellt sind, stellen die Intensitätsverläufe bei den genannten Wellenlängen dar, wenn kein Partikel den Lichtstrahl durchtritt. Die Intensitätsverläufe I_{E} und I_{D} ergeben sich, wenn eine Mikrobe den Lichtstrahl durchtritt. Es ist zu erkennen, dass bei der Wellenlänge λ_{D} die Intensität ID deutlich abnimmt, d. h. dass es in diesem Wellenlängenbereich zu einer starken Auslöschung beim Durchtritt der Mikrobe kommt. In dem zweiten Wellenlängenbereich λ_{E} kommt es jedoch nur zu einer geringen Intensitätsänderung, welche innerhalb eines Grenzwertebereiches 60 bleibt. Hieran ist eine Mikrobe zu erkennen. Im oberen Diagramm in Figur 8 ist die Auslöschung E über der Zeit t dargestellt. Die Auslöschungen bei den zwei unterschiedlichen Wellenlängen λ_{E} und λ_{D} ergeben sich als E_{D}=I_{0,D}-I_{D} und E_{E}=I_{0,E}-I_{E}. Die obere Kurve in Figur 8 stellt das Verhältnis E_{D}/E_{E} (t) dar. Dies ist die Kurve 62. Wenn der Partikel vollständig in den Lichtstrahl eingetreten ist, liegt dieser Wert 62 auf der Geraden 64 oberhalb eines Grenzwertes 66. Dieser ist beispielsweise 3. Dieses Verhältnis oberhalb des Grenzwertes 66 zeigt ebenfalls an, dass es sich um eine Mikrobe handelt.

Figur 9 zeigt nun Diagramme entsprechend denen von Figur 8 für den Fall, dass der Partikel, welcher den Lichtstrahl durchtritt, keine Mikrobe ist. Es ist zu erkennen, dass die Intensitätsänderung des Intensitätsverlaufes I_{D} deutlich geringer ist als in dem Fall, dass eine Mikrobe den Lichtstrahl durchtritt. Gleichzeitig verringert sich die Intensität I_{E} stärker, sodass die Kurve den Grenzwertebereich 60 verlässt. Auch hier werden die Auslöschungen E_{E} und E_{D} in der oben geschriebenen Weise gebildet und ins Verhältnis gesetzt, was als Kurve 62 im oberen Diagramm dargestellt ist. Hier ist zu erkennen, dass der Bereich, welcher als Gerade verläuft und den Durchtritt des Partikels durch den Lichtstrahl anzeigt, auf dem konstanten Wert 64' gelegen ist, welcher unterhalb des Grenzwertes 66 liegt. Dies zeigt an, dass hier keine Mikrobe den Lichtstrahl durchtritt, sondern ein andersartiger Partikel.

Diese anhand der Fig. 5 bis 9 beschriebene Auswertung wird in dem Sensorsystem von der Auswerteeinrichtung 28 anhand der Ausgangssignale der Intensitätssensoren 28 oder 44 durchgeführt.

**Bezugszeichenliste**

| | | |
|---|---|---|
| 2 | - | Lichtquelle |
| 4 | - | Lichtstrahl |
| 6 | - | Kollimatorlinse |
| 8 | - | Blende |
| 10 | - | Sammellinse |
| 12 | - | Fokus |
| 14 | - | Messzelle |
| 16 | - | Partikel |
| 18 | - | Kollimatorlinse |
| 20 | - | Blende |
| 22 | - | Prisma |
| 24 | - | Lichtstrahl |
| 26 | - | Intensitätssensor |
| 28 | - | Auswerteeinrichtung |
| 30a, 30b, 30c | - | monochromatische Einzel-Lichtquellen |
| 32, 34 | - | Lichtleiter |
| 36 | - | Lichtstrahl |
| 38 | - | Blende |
| 40 | - | Strahlteiler |
| 42 | - | Lichtstrahlen |
| 44a, 44b, 44c | - | Einzel-Intensitätssensoren |
| 46 | - | Bereich des Lichtstrahls |
| 48, 50, 52 | - | Absorptionskurven |
| 54, 56, 58 | - | Werte des Absorptionsverhältnisses A_{A}/ A_{B} |
| 60 | - | Grenzwertebereich für die Intensität I_{E} |
| 62 | - | Verhältnis der Auslöschungen E_{D}/E_{E} |
| 64, 64' | - | Wert des Auslöschungsverhältnisses E_{D}/E_{E} |
| 66 | - | Grenzwert des Auslöschungsverhältnisses |
| f | - | Brennweite |
| I | - | Breite der Messzelle |
| d, d₀, d₁, d₂, d₃ | - | Strahldurchmesser |
| λ_{A}, λ_{B}, λ_{C}, λ_{D}, λ_{E} | - | Wellenlängen |
| I_{A}, I_{B}, I_{C}, I_{D}, I_{E} | - | Intensitäten bei unterschiedlichen Wellenlängen |
| A_{A}, A_{B}, A_{C} | - | Absorption bei unterschiedlichen Wellenlängen |
| E_{D}, E_{E} | - | Auslöschung bei unterschiedlichen Wellenlängen |
| t | - | Zeit |
| S | - | Strömungsrichtung |

## Patentansprüche

1. Sensorsystem zum Erfassen und Spezifizieren von einzelnen Partikeln (16) in einem Fluid mit
einer von dem Fluid durchströmbaren Messzelle (14),
einer Lichtquelle (2;30), welche an der Messzelle (14) angeordnet ist und einen die Messzelle (14) durchlaufenden Lichtstrahl (4;36) erzeugt,
einem Intensitätssensor (26;44), welcher an der Messzelle (14) derart gegenüberliegend zu der Lichtquelle (2;30) angeordnet ist, dass er den aus der Messzelle (14) austretenden Lichtstrahl erfasst, wobei der Intensitätssensor zur separaten Erfassung der Intensität (I_{A}, I_{B}) des Lichtstrahls in zumindest zwei unterschiedlichen Wellenlängenbereichen (λ_{A}, λ_{B}) ausgebildet ist sowie mit einer Auswerteeinrichtung (28) verbunden ist, welche derart ausgebildet ist, dass sie anhand der erfassten Intensitäten (I_{A},I_{B}) in den zwei Wellenlängenbereichen (λ_{A};λ_{B}) die Art eines den Lichtstrahl passierenden Partikels (16) so erkennt, dass Mikroorganismen in dem Fluid nachgewiesen werden können, wobei die Auswerteeinrichtung (28) derart ausgebildet ist, dass sie zur Bestimmung des Absorptionsgrades (A_{A},A_{B}) für einen erfassten Wellenlängenbereich (λ_{A}) die aktuell erfasste Intensität (I_{A},I_{B}) von einer zuvor erfassten oder gespeicherten Grund-Intensität (I_{0,A};I_{0,B};I_{0,C}) des Lichtstrahls ohne Partikel (16) subtrahiert, **dadurch gekennzeichnet, dass**
die Auswerteeinrichtung derart ausgebildet ist, dass sie die ermittelten Absorptionsgrade (A_{A},A_{B}) für zwei unterschiedliche Wellenlängenbereiche (λ_{A};λ_{B}) ins Verhältnis zueinander setzt und dieses Verhältnis (58) mit einem gespeicherten Verhältniswert (54,56) für einen bestimmten zu erkennenden Partikel (16) vergleicht, und
die Auswerteeinrichtung (28) die in den zwei Wellenlängenbereichen aktuell erfassten Intensitäten mit vorgegebenen Grenzwerten vergleicht.

2. Sensorsystem nach Anspruch 1, **dadurch gekennzeichnet, dass** der Intensitätssensor (26;44) derart ausgebildet ist, dass ein erster Wellenlängenbereich (λ_{A}), in welchem die Intensität (I_{A}) separat erfassbar ist, ein Wellenlängenbereich (λ_{A}) kleiner als 300 nm ist.

3. Sensorsystem nach Anspruch 1 oder 2, **dadurch gekennzeichnet, dass** der Intensitätssensor (26;44) derart ausgebildet ist, dass ein erster Wellenlängenbereich (λ_{A}), in welchem die Intensität (I_{A}) separat erfassbar ist, ein Wellenlängenbereich (λ_{A}) ist, in welchem die zu erfassenden Partikel (16) ein lokales Minimum in der Lichtabsorption A_{A} aufweisen, vorzugsweise eine Wellenlänge zwischen 220 und 260 nm.

4. Sensorsystem nach einem der vorangehenden Ansprüche, **dadurch gekennzeichnet, dass** der Intensitätssensor (26;44) derart ausgebildet ist, dass ein zweiter Wellenlängenbereich(λ_{B}), in welchem die Intensität I_{B} separat erfassbar ist, ein Wellenlängenbereich ist, in welchem die zu erfassenden Partikel (16) ein lokales Maximum in der Lichtabsorption A_{B} aufweisen, vorzugsweise eine Wellenlänge (λ_{B}) zwischen 240 und 290 nm.

5. Sensorsystem nach einem der vorangehenden Ansprüche, **dadurch gekennzeichnet, dass** der Intensitätssensor (26;44) derart ausgebildet ist, dass ein dritter Wellenlängenbereich(λ_{C}), in welchem die Intensität I_{C} separat erfassbar ist, ein Wellenlängenbereich (λ_{C}) ist, in welchem die zu erfassenden Partikel (16) im Wesentlichen kein Licht absorbieren, vorzugsweise eine Wellenlänge (λ_{C}) zwischen 300 und 1100 nm.

6. Sensorsystem nach einem der vorangehenden Ansprüche, **dadurch gekennzeichnet, dass** die Auswerteeinrichtung (28) derart ausgebildet ist, dass sie die Größe eines Partikels (16) auf Grundlage der erfassten Intensität (I_{A}, I_{B}, I_{C}) bestimmt, bevorzugt indem ein erfasster Absorptionsgrad (A_{A},A_{B},A_{C}) auf eine Grund-Intensität (I_{0,A};I_{0,B};I_{0,C}) des Lichtstrahls ohne Partikel (16) bezogen wird.

7. Sensorsystem nach einem der vorangehenden Ansprüche, **dadurch gekennzeichnet, dass** der Lichtstrahl hinter der Lichtquelle (2) derart fokussiert wird, dass sein Fokus (12) im Inneren der Messzelle (14) gelegen ist, wobei der Lichtstrahl in seinem Fokusbereich (12) vorzugsweise eine Querschnittsfläche aufweist, welche kleiner als das 60fache der Querschnittsfläche der zu erfassenden Partikel (16) ist.

8. Sensorsystem nach einem der vorangehenden Ansprüche, **dadurch gekennzeichnet, dass** der Lichtstrahl in seinem Fokusbereich (12) eine Querschnittsfläche aufweist, welche kleiner als 500 µm² ist, weiter bevorzugt kleiner als 100µm² oder 24 µm².

9. Sensorsystem nach einem der vorangehenden Ansprüche, **dadurch gekennzeichnet, dass** die Querschnittsfläche des Lichtstrahls sich von dessen Fokusbereich (12) zu dem Intensitätssensor (26) um nicht mehr als 100 %, vorzugsweise um nicht mehr als 50 % aufweitet.

10. Sensorsystem nach einem der vorangehenden Ansprüche, **dadurch gekennzeichnet, dass** im Strahlenverlauf des Lichtstrahls hinter der Lichtquelle (2) und vor dem Eintritt in die Messzelle (14) und/oder hinter der Messzelle (14) und vordem Intensitätssensor (26) ein Kollimator (6,18) und/oder eine Blende (8,20)angeordnet ist.

11. Sensorsystem nach einem der vorangehenden Ansprüche, **dadurch gekennzeichnet, dass** die Lichtquelle aus mehreren, vorzugsweise monochromatischen Einzel-Lichtquellen (30a,30b,30c) mit unterschiedlichen Wellenlängen (λ_{A},λ_{B};λ_{C}) gebildet ist.

12. Sensorsystem nach einem der vorangehenden Ansprüche, **dadurch gekennzeichnet, dass** der Intensitätssensor aus mehreren Einzel-Intensitätssensoren (44a,44b,44c) gebildet ist und einen Strahlteiler (40) aufweist, welcher den aus der Messzelle (14) austretenden Lichtstrahl in Teilstrahlen (42) unterschiedlicher Wellenlänge (λ_{A},λ_{B};λ_{C}) zerlegt, welche jeweils einem der Einzel-Intensitätssensoren (44a,44b,44c) zugeleitet werden.

13. Sensorsystem nach einem der vorangehenden Ansprüche, **dadurch gekennzeichnet, dass** der Lichtstrahl von der Lichtquelle (30a,30b,30c) zu der Messzelle (14) durch einen Lichtleiter (32,34) geführt wird.

## Claims

1. A sensor system for detecting and specifying individual particles (16) in a fluid, with
a measurement cell (14) through which the fluid can flow,
a light source (2; 30) which is arranged on the measurement cell (14) and produces a light beam (4; 36) which runs through the measurement cell (14),
an intensity sensor (26; 44) which is arranged on the measurement cell (14) in a manner lying opposite the light source (2; 30) such that it detects the light beam which exits from the measurement cell (14), wherein
the intensity sensor is designed for the separate detection of the intensity (I_{A}, I_{B}) of the light beam in at least two different wavelength regions (λ_{A}, λ_{B}), and is connected to an evaluation device (28) which is designed in a manner such that it recognises the type of a particle (16) which passes through the light beam on the basis of the detected intensities (I_{A}, I_{B}) in the two wavelength regions (λ_{A}; λ_{B}) such that microorganisms in the fluid can be detected, wherein the evaluation device (28) is designed in a manner such that for determining the absorptivity (A_{A}, A_{B}) for a detected wavelength region (λ_{A}), it subtracts the currently detected intensity (I_{A}, I_{B}) from a previously detected or stored base intensity (I_{0,A}; I_{0,B}; I_{0,C}) of the light beam without particles (16), **characterized in that** the evaluation device is designed in a manner that it puts the determined absorptivities (A_{A}, A_{B}) for two different wavelength regions (λ_{A};λ_{B}) into a ratio to one another and compares this ratio (58) to a stored ratio value (54, 56) for a certain particle (16) to be recognised, and
the evaluation device (28) compares the intensities which are currently detected in the two wavelength regions with predefined limit values.

2. A sensor system according to claim 1, **characterised in that** the intensity sensor (26; 44) is designed in a manner such that a first wavelength region (λ_{A}), in which the intensity (I_{A}) can be detected separately, is a wavelength region (λ_{A}) of smaller than 300 nm.

3. A sensor system according to claim 1 or 2, **characterised in that** the intensity sensor (26; 44) is designed in a manner such that a first wavelength region (λ_{A}), in which the intensity (I_{A}) can be detected separately, is a wavelength region (λ_{A}), in which the particles (16) to be detected have a local minimum in the light absorption A_{A}, preferably a wavelength between 220 and 260 nm.

4. A sensor system according to one of the preceding claims, **characterised in that** the intensity sensor (26; 44) is designed in a manner such that a second wavelength region (λ_{B}), in which the intensity (I_{B}) can be detected separately, is a wavelength region, in which the particles (16) to be detected have a local maximum in the light absorption A_{B}, preferably a wavelength (λ_{B}) between 240 and 290 nm.

5. A sensor system according to one of the preceding claims, **characterised in that** the intensity sensor (26; 44) is designed in a manner such that a third wavelength region (λ_{C}), in which the intensity I_{C} can be detected separately, is a wavelength region (λ_{C}) in which the particles (16) to be detected essentially absorb no light, preferably a wavelength (λ_{C}) between 300 and 1100 nm.

6. A sensor system according to one of the preceding claims, **characterised in that** the evaluation device (28) is designed in a manner such that it determines the size of a particle (16) on the basis of the detected intensity (I_{A}, I_{B}, I_{C}), preferably by way of a detected absorptivity (A_{A}, A_{B}, A_{C}) being related to a base intensity (I_{0,A}; I_{0,B}; I_{0,C}) of the light beam without particles (16).

7. A sensor system according to one of the preceding claims, **characterised in that** the light beam is focussed behind the light source (2) in a manner such that its focus (12) is situated in the inside of the measurement cell (14), wherein the light beam in its focus region (12) preferably has a croos-sectiional area which is smaller than 60-times the croos-sectiional area of the particles (16) to be detected.

8. A sensor system according to one of the preceding claims, **characterised in that** the light beam in its focus region (12) has a croos-sectional area which is smaller than 500 µm², preferably smaller than 100 µm² or 24 µm².

9. A sensor system according to one of the preceding claims, **characterised in that** the croos-sectional area of the light beam expands from its focus region (12) to the intensity sensor (26) by not more than 100 %, preferably by not more than 50 %.

10. A sensor system according to one of the preceding claims, **characterised in that** a collimator (6, 18) and/or an aperture (8, 20) is arranged in the beam course of the light beam behind the light source (2) and in front of the entry into the measurement cell (14) and/or behind the measurement cell (14) and in front of the intensity sensor (26).

11. A sensor system according to one of the preceding claims, **characterised in that** the light source is formed from several, preferably monochromatic individual light sources (30a, 30b, 30c) with different wavelengths (λ_{A}, λ_{B}, λ_{C}).

12. A sensor system according to one of the preceding claims, **characterised in that** the intensity sensor is formed from several individual intensity sensors (44a, 44b, 44c) and comprises a beam splitter (40) which breaks down the light beam which exits from the measurement cell (14) into part-beams (42) of a different wavelength (λ_{A}, λ_{B}, λ_{C}) which are each led to one of the individual intensity sensors (44a, 44b, 44c).

13. A sensor system according to one of the preceding claims, **characterised in that** the light beam is led from the light source (30a, 30b, 30c) to the measurement cell (14) through a fibre-optic (32, 34).

## Revendications

1. Système de détection destiné à détecter et spécifier des particules individuelles (16) dans un fluide, comprenant
une cellule de mesure (14) pouvant être traversée par le fluide,
une source de lumière (2 ; 30), qui est agencée au niveau de la cellule de mesure (14) et qui génère un faisceau lumineux (4 ; 36) traversant la cellule de mesure (14),
un capteur d'intensité (26 ; 44), qui est agencé au niveau de la cellule de mesure (14) face à la source de lumière (2 ; 30) de manière à détecter le faisceau lumineux sortant de la cellule de mesure (14),
dans lequel le capteur d'intensité est conçu pour détecter de manière séparée l'intensité (I_{A}, I_{B}) du faisceau lumineux dans au moins deux plages de longueurs d'onde (λ_{A}, λ_{B}) différentes et est relié à un dispositif d'évaluation (28) conçu de manière à reconnaître le type d'une particule (16) traversant le faisceau lumineux à l'aide des intensités (I_{A}, I_{B}) détectées dans les deux plages de longueurs d'onde (λ_{A}, λ_{B}) de façon telle que des microorganismes peuvent être détectés dans le fluide,
dans lequel le dispositif d'évaluation (28) est conçu de manière à soustraire l'intensité (I_{A}, I_{B}) venant d'être détectée d'une intensité de base (I_{0,A}; I_{0,B}, I_{0,C}) précédemment détectée ou mémorisée du faisceau lumineux sans particule (16) afin de déterminer le degré d'absorption (A_{A}, A_{B}) d'une plage de longueur d'onde (λ_{A}) détectée,
**caractérisé en ce que** le dispositif d'évaluation (28) est conçu de manière à établir le rapport des degrés d'absorption (A_{A}, A_{B}) déterminés pour deux plages différentes de longueurs d'onde (λ_{A}, λ_{B}) et à comparer ledit rapport (58) à une valeur de rapport mémorisée (54, 56) pour une particule (16) spécifique à reconnaître, et
**en ce que** le dispositif d'évaluation (28) compare des intensités venant d'être détectées dans les deux plages de longueurs d'onde à des valeurs limites prédéfinies.

2. Système de détection selon la revendication 1, **caractérisé en ce que** le capteur d'intensité (26 ; 44) est conçu de manière telle qu'une première plage de longueurs d'onde (λ_{A}), au sein de laquelle l'intensité (I_{A}) peut être détectée de manière séparée, est une plage de longueurs d'onde (λ_{A}) inférieure à 300 nm.

3. Système de détection selon la revendication 1, **caractérisé en ce que** le capteur d'intensité (26 ; 44) est conçu de manière à ce qu'une première plage de longueurs d'onde (λ_{A}) au sein de laquelle l'intensité (I_{A}) peut être détectée de manière séparée est une plage de longueurs d'onde (λ_{A}) au sein de laquelle les particules (16) à détecter présentent un minimum local de l'absorption de lumière A_{A}, de manière préférée une longueur d'onde comprise entre 220 et 260 nm.

4. Système de détection selon l'une des revendications précédentes, **caractérisé en ce que** le capteur d'intensité (26 ; 44) est conçu de manière telle qu'une deuxième plage de longueurs d'onde (λ_{B}) au sein de laquelle l'intensité I_{B} peut être détectée de manière séparée est une plage de longueurs d'onde au sein de laquelle les particules (16) à détecter présentent un maximum local de l'absorption de lumière A_{B}, de manière préférée une longueur d'onde (λ_{B}) comprise entre 240 et 290 nm.

5. Système de détection selon l'une des revendications précédentes, **caractérisé en ce que** le capteur d'intensité (26 ; 44) est conçu de manière telle qu'une troisième plage de longueurs d'onde (λ_{C}) au sein de laquelle l'intensité I_{C} peut être détectée de manière séparée est une plage de longueurs d'onde (λ_{C}) au sein de laquelle les particules (16) à détecter n'absorbent essentiellement pas de lumière, de manière préférée une longueur d'onde (λ_{C}) comprise entre 300 et 1100 nm.

6. Système de détection selon l'une des revendications précédentes, **caractérisé en ce que** le dispositif d'évaluation (28) est conçu de manière à déterminer la taille d'une particule (16) en fonction de l'intensité (I_{A}, I_{B}, I_{C}) détectée, de manière préférée en rapportant un degré d'absorption (A_{A}, A_{B}, A_{C}) détecté à une intensité de base (I_{0,A}; I_{0,B}; I_{0,C}) du faisceau lumineux sans particule (16).

7. Système de détection selon l'une des revendications précédentes, **caractérisé en ce que** le faisceau lumineux est focalisé derrière la source lumineuse (2) de telle manière que son foyer (12) est situé à l'intérieur de la cellule de mesure (14), le faisceau lumineux présentant dans sa région focale (12) de manière préférée une surface de section qui est inférieure à 60 fois la surface de section de la particule (16) à détecter.

8. Système de détection selon l'une des revendications précédentes, **caractérisé en ce que** le faisceau lumineux présente dans sa région focale (12) une surface de section inférieure à 500 µm², de manière plus préférée inférieure à 100 µm² ou à 24 µm².

9. Système de détection selon l'une des revendications précédentes, **caractérisé en ce que** la surface de section du faisceau lumineux ne s'élargit pas, depuis sa région focale (12) vers le capteur d'intensité (26), de plus de 100 %, de manière préférée pas de plus de 50%.

10. Système de détection selon l'une des revendications précédentes, **caractérisé en ce qu'**un collimateur (6, 18) et/ou un diaphragme (8, 20) et/sont agencé(s) sur le trajet du faisceau lumineux après la source lumineuse (2) et avant l'entrée dans la cellule de mesure (14) et/ou après la cellule de mesure (14) et avant le capteur d'intensité (26).

11. Système de détection selon l'une des revendications précédentes, **caractérisé en ce que** la source de lumière est formée de plusieurs sources de lumière individuelles (30ₐ, 30_{b}, 30_{c}), de manière préférée monochromatiques, présentant des longueurs d'onde (λ_{A}, λ_{B}, λ_{C}) différentes.

12. Système de détection selon l'une des revendications précédentes, **caractérisé en ce que** le capteur d'intensité est formé de plusieurs capteurs d'intensité individuels (44a, 44b, 44c) et présente un séparateur de faisceau (40) qui décompose le faisceau lumineux sortant de la cellule de mesure (14) en faisceaux partiels (42) de longueurs d'onde (λ_{A}, λ_{B}, λ_{C}) différentes qui sont dirigés vers respectivement un des capteurs d'intensité individuels (44a, 44b, 44c).

13. Système de détection selon l'une des revendications précédentes, **caractérisé en ce que** le faisceau lumineux est guidé de la source de lumière (30a, 30b, 30c) vers la cellule de mesure (14) grâce à un guide optique (32, 34).
